# EUROPÄISCHE PATENTANMELDUNG

(11) **EP 3 135 484 A1**
(43) Veröffentlichungstag der Anmeldung: **01.03.2017**
(21) Anmeldenummer: 16164784.7
(22) Anmeldetag: 12.04.2016
(51) Int. Cl.: B32B 25/04, B32B 25/08, B32B 25/10, B32B 33/00

(54) **FLEXIBLE MEMBRAN UND VERFAHREN ZU DEREN HERSTELLUNG**

(30) Priorität: 06.08.2015 DE 102015215021
(71) Anmelder: ContiTech Elastomer-Beschichtungen GmbH, 30165 Hannover (DE)
(72) Erfinder: Fennel, Heike, 37079 Göttingen (DE); Petrat, Sven, 37589 Kalefeld (DE); Köhler, Carsten, 37154 Northeim (DE)
(74) Vertreter: Preusser, Andrea

(57) **Zusammenfassung**

Die Erfindung betrifft eine flexible Membran, enthaltend
- zumindest zwei Elastomerlagen (1', 1") jeweils als obere (1') und untere (1") Deckschicht und
- zumindest eine zwischen den Elastomerlagen (1', 1") angeordnete Gewebelage (4`, 4") enthält, wobei die Gewebelage (4', 4") auf ihrer Oberseite und ihrer Unterseite jeweils mit einer Beschichtung (3', 3", 3"', 3"") auf der Basis wenigstens eines Copolymers oder jeweils mit einer Beschichtung (3', 3", 3"', 3"") auf der Basis wenigstens eines thermoplastischen Kunststoffs versehen ist.

Zusätzlich wird ein Verfahren zur Herstellung der erfindungsgemäßen Membran vorgestellt.

## Beschreibung

### Flexible Membran und Verfahren zu deren Herstellung

Die Erfindung betrifft eine flexible Membran, insbesondere eine Formmembran, aufweisend zumindest zwei Elastomerlagen und zumindest eine zwischen diesen Elastomerlagen eingebettete Gewebelage.
Ferner betrifft die Erfindung ein Verfahren zur Herstellung einer solchen flexiblen Membran.

Membranen sind dichtende und flexibel bewegliche Wände, die zwei Räume voneinander trennen, in denen sich meist unterschiedliche Medien befinden bzw. zwei unterschiedliche Druckverhältnisse vorherrschen. Sie können jeweils als präzise arbeitende Flach- oder Formmembranen ausgestaltet sein.

Moderne Hochleistungs-Membranen sollen insbesondere eine Kohlenwasserstoffpermeation oder eine Stickstoffpermeation hemmen und gleichzeitig dynamisch stabil sein. Hierzu wurde beispielsweise in DE102004031337A1 oder in DE102004031335A1 vorgeschlagen, zwei elastomerbeschichtete Gewebemembranen mit einer Sperrfolie bei hoher Elastizität zu kombinieren. Damit kann zwar die Permeation von flüchtigen Bestandteilen der Kraftstoffgemische, Kohlenwasserstoffe und / oder Stickstoffe, zunächst verbessert werden, aber bei zunehmender dynamischer Belastung ist in der Regel die Sperrfolie gebrochen.
Als Sperrfolien werden hierbei solche auf Basis von Polyamid, Polyvinylalkohol oder Ethylen-Vinylalkohol-Copolymeren verwendet.
Des Weiteren ist die Verwendung von Gewebelagen in Formmembranen bspw. in DE102012103844A1 beschrieben. Bei höheren Druckbelastungen und somit höherer dynamischer Belastung weisen derartige Formmembranen aber häufig eine mangelnde Dichtigkeit auf und es kann zu einem Ablösen der Gewebelage von den sie umgebenden Lagen kommen.

Der Erfindung liegt daher die Aufgabe zu Grunde, eine flexible Membran der eingangs genannten Art bereitzustellen, die sich durch eine verbesserte Lebensdauer bei über die Lebensdauer möglichst gleichbleibender Gasdichtigkeit auszeichnet.

Gelöst wird diese Aufgabe erfindungsgemäß durch eine Membran, die
- zumindest zwei Elastomerlagen jeweils als obere und untere Deckschicht und
- zumindest eine zwischen den Elastomerlagen angeordnete Gewebelage enthält, wobei die Gewebelage auf ihrer Oberseite und ihrer Unterseite jeweils mit einer Beschichtung auf der Basis wenigstens eines Copolymers oder jeweils mit einer Beschichtung auf der Basis wenigstens eines thermoplastischen Kunststoffs versehen ist.

Überraschenderweise konnte mit Hilfe einer derartigen Beschichtung die Diffusionsraten gegenüber Membranen, die nur aus Kautschuk (Gummi) aufgebaut sind, um das 10fache verringert werden. Gleichzeitig erhöht sich die Lebensdauer derartiger Membranen, da das Gewebe durch die Beschichtung geschützt wird und in der Regel keine zusätzlichen Folien benötigt werden, die brechen könnten.

Die in der erfindungsgemäßen Membran vorliegenden beiden Elastomerlagen, die als obere und untere Deckschicht fungieren, können auf unterschiedlichen Kautschuken basieren, wobei Nitrilkautschuk (NBR), hydrierter Nitrilkautschuk (HNBR) oder Fluorkautschuk (FKM) aufgrund ihrer guten Ölbeständigkeit bevorzugt jeweils alleine oder in Kombination eingesetzt werden.
Es können aber auch Butylkautschuk (IIR), Ethylen-Propylen-Dien-Kautschuk (EPDM) oder Ethylen-Propylen-Kautschuk (EPM) alleine oder in Kombination eingesetzt werden. Die Schichtdicken der beiden Elastomerlagen muss mindestens 0,55mm betragen, um eine ausreichende dynamische Tüchtigkeit gewährleisten zu können.

Die einzelnen Gewebelagen können als Fäden sowohl Faser- als auch Filamentgarne aller nativen und synthetischen, metallischen und keramischen Rohstoffe enthalten. Es kann sich dabei z. B. um Garne aus Baumwolle, Viskose, Polyamid, Polyester, Aramid, Glas, Kohlenstoff, Stahl Basalt usw. handeln. Es ist möglich, dass innerhalb eines Gewebes unterschiedliche Materialien zum Einsatz kommen.

Besonders gut geeignet sind solche Materialien, die sich durch Verformbarkeit und Beständigkeit gegen Öle oder andere Flüssigkeiten auszeichnen, wie bspw. Polyamid. Innerhalb einer Membran können auch mehrere Gewebelagen aus unterschiedlichen Materialien verwendet werden. Gewebelagen aus einem Gewebe aus Polyester und Viskose haben sich für den Einsatz in Formmembranen als vorteilhaft erwiesen, da sie aus Stapelfasergarnen hergestellt sind und sich durch eine besonders hohe dynamische Beständigkeit auszeichnen.

Erfindungswesentlich ist, dass die Gewebelage auf ihrer Ober- und Unterseite jeweils mit wenigstens einer Beschichtung auf der Basis wenigstens eines Copolymers oder jeweils mit wenigstens einer Beschichtung auf der Basis wenigstens eines thermoplastischen Kunststoffs versehen ist.
Als thermoplastische Kunststoffe werden bevorzugt Polyvinylacetat (PVAC) oder Polyvinylalkohol (PVOH) verwendet.
Als Copolymer eignet sich besonders gut ein Ethylen-Vinylalkohol-Copolymer (EVOH). EVOH bietet die beste Diffusionsbeständigkeit gegenüber Industriegasen, wie Wasserstoff, Sauerstoff, Stickstoff, Kohlendioxid, Acetylen, Ethen, Edelgase, Ammoniak, Wassergas, Generatorgas, Stadtgas, Synthesegas, etc. EVOH weist weiterhin eine besonders gute Verarbeitbarkeit auf. Die Eigenschaft von EVOH kann je nach Anwendung durch die Auswahl des richtigen Verhältnisses von Ethylen und Vinylalkohol angepasst werden.

Die Beschichtung liegt in einer besonders bevorzugten Ausführungsform als Lösung vor. Insbesondere das Copolymer kann hierbei in Form einer wässrigen Lösung eingesetzt werden, was zu einer deutlichen Reduzierung von Lösungsmitteln bei der Herstellung der flexiblen Membran führt. Bei Verwendung des Copolymers in einer wässrigen Lösung, wird das Copolymer zunächst in Wasser gelöst und auf die Ober- und Unterseite der Gewebelage aufgebracht. Anschließend wird die so beschichtete Gewebelage getrocknet, wodurch das vorhandene Wasser entweichen kann.

Die Beschichtung der Ober- und der Unterseite der jeweiligen Gewebelage kann gleich oder verschieden voneinander sein.
Bevorzugt enthält die erfindungsgemäße Membran zwei Gewebelagen.

Zusätzlich kann in der Formmembran noch wenigstens eine Haftschicht vorhanden sein, die die Haftung zwischen den beschichteten Gewebelagen und den Decklagen erhöht. Als Haftschicht eignen sich kalandrierte Platten auf der Basis einer Haftmischung. Ebenso können zur Haftung Resorcin-Formaldehyd-Latex (RFL), Silane oder weitere Haftmittel, wie sie bspw. unter dem Handelsnamen Chemosil® oder Chemlok® erhältlich sind, verwendet werden. Aufgrund der einfachen Handhabung wird die Verwendung einer Gummilösung als Haftschicht bevorzugt.
Die Haftschicht kann durch Aufsprühen, bevorzugt allerdings durch Aufstreichen, aufgebracht werden.

Vorteilhaft durch diese Beschichtung ist es, dass die erfindungsgemäße Membran sowohl entweder als Flachmembran ausgestanzt werden kann oder als Formmembran verformt werden kann.

Die erfindungsgemäße Membran lässt sich mit einem Verfahren herstellen, das zumindest folgende Schritte enthält:
- Beschichten der Oberseite und der Unterseite wenigstens einer Gewebelage mit jeweils einer Beschichtung auf der Basis wenigstens eines Copolymers oder mit jeweils einer Beschichtung auf der Basis wenigstens eines thermoplastischen Kunststoffs,
- Aufbringen einer unvulkanisierten Kautschukmischung, die die obere Elastomerdeckschicht bildet, auf die Oberseite einer Gewebelage,
- Aufbringen einer unvulkanisierten Kautschukmischung, die die untere Elastomerdeckschicht bildet, auf die untere Seite einer Gewebelage,
- Vulkanisation des Verbundes bis zu einem Vernetzungsgrad von 40 bis 60 % für Formmembranen in einer Rotations-Vulkanisieranlage und einem Vernetzungsgrad von 100% für Flachmembranen in einer Rotations-Vulkanisieranlage.

Die obere Deckschicht und die untere Deckschicht können jeweils in Form einer Kautschukmischungslösung oder in Form einer kalandrierten Platte aus einer unvulkanisierten Kautschukmischung aufgebracht werden. Bevorzugt ist es, wenn die Deckschichten jeweils in Form einer unvulkanisierten Kautschukmischung aufgebracht werden.

Anschließend kann der so erhaltene Verbund zu einer Flachmembran ausgestanzt werden und / oder zu einer Formmembran verformt werden. Die Verformung zu einer Formmembran erfolgt bevorzugt durch Vulkanisation bis zur vollständigen Vernetzung in einer Tiefziehform.

Enthält die erfindungsgemäße flexible Membran lediglich eine Gewebelage, so werden die obere Elastomerdeckschicht und die untere Elastomerdeckschicht jeweils auf die Oberseite und die Unterseite der gleichen beschichteten Gewebelage aufgebracht.

In einer ganz besonders bevorzugten Ausführungsform enthält die erfindungsgemäße flexible Membran zwei Gewebelagen. Die beiden Gewebelagen werden nach der Beschichtung aufeinander gelegt, wobei vor dem Aufeinanderlegen jeweils auf beide beschichtete Gewebelagen oder nur auf eine beschichtete Gewebelage jeweils auf der Oberseite und / oder der Unterseite der jeweiligen Gewebelage wenigstens eine Haftschicht aufgebracht werden kann. Anschließend wird dann die obere Deckschicht auf die nach außen weisende Seite der ersten Gewebelage aufgebracht und die untere Deckschicht auf die nach außen weisende Seite der zweiten Gewebelage.

Im Folgenden wird die Erfindung anhand eines vorteilhaften Ausführungsbeispiels unter Bezugnahme auf eine Tabelle und die beigefügte Figur näher erläutert.
In der Tabelle 1 stellen V1 bis V4 jeweils Vergleichsmembranen gemäß dem bisherigen Stand der Technik dar. E1 zeigt eine erfindungsgemäße Membran.

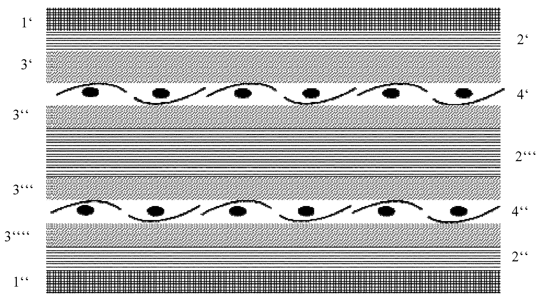

Die einzige Fig.1 zeigt schematisch die Anordnung der Schichten und Lagen in der Membran anhand eines ausgewählten Beispiels, ohne auf dieses beschränkt zu sein.

**Tabelle 1**

| | | Permeationswerte N₂ | Dauerknickversuch gemäß DIN 53359 |
|---|---|---|---|
| | | Einheit: [*10⁻¹⁷m²/s*Pa] | Anzahl Zyklen ohne Bruch |
| V1 | IIR ohne Beschichtung | 2-4 | >= 2 Mio |
| V2 | ECO ohne Beschichtung | 4- 15 | >= 2 Mio |
| V3 | NBR ohne Beschichtung | 8-15 | >= 2 Mio |
| V4 | NBR mit Mehrschichtfolie aus EVOH | 0,01 - 0,2 | <= 500.000* |
| E1 | NBR mit Gewebe beschichtet mit EVOH | 0,01 - 0,2 | >= 2 Mio |

| | | | |
|---|---|---|---|
| *Ablösung im Verbund | | | |

Aus Tabelle 1 ist ersichtlich, dass nur bei einem erfindungsgemäßen Aufbau der Membran E1 sich herausragende Permeationswerte bei gleichzeitig guter Lebensdauer zeigen. Die Membranen aus dem Stand der Technik (=Vergleichsmembranen V1 bis V4) zeigen diese beiden Effekte gleichzeitig nicht.
In Tabelle 1 besteht jeweils die obere und die untere Decklage aus derselben Elastomerlage, d.h. die obere und die untere Decklage enthalten als Kautschuktypen jeweils nur IIR, ECO oder NBR. Der restliche Aufbau der Membranen ist ansonsten bei den Vergleichsmembranen V1 bis V4 und der erfindungsgemäßen Membran E1 gleich.

### Bezugszeichenliste

### (Teil der Beschreibung)

- 1': obere Decklage
- 1": untere Decklage
- 2': Haftschicht
- 2": Haftschicht
- 2'": Haftschicht (einlagig oder zweilagig)
- 3': Beschichtung, z.B. wässrige EVOH-Lösung
- 3": Beschichtung, z.B. wässrige EVOH-Lösung
- 3'": Beschichtung, z.B. wässrige EVOH-Lösung
- 3"": Beschichtung, z.B. wässrige EVOH-Lösung
- 4': Gewebelage
- 4": Gewebelage

## Patentansprüche

1. Flexible Membran, enthaltend
- zumindest zwei Elastomerlagen (1', 1") jeweils als obere (1') und untere (1") Deckschicht und
- zumindest eine zwischen den Elastomerlagen (11") angeordnete Gewebelage (4', 4") enthält, wobei die Gewebelage (4', 4") auf ihrer Oberseite und ihrer Unterseite jeweils mit einer Beschichtung (3', 3", 3"', 3"") auf der Basis wenigstens eines Copolymers oder jeweils mit einer Beschichtung (3', 3", 3"', 3"") auf der Basis wenigstens eines thermoplastischen Kunststoffs versehen ist.

2. Flexible Membran nach Anspruch 1, **dadurch gekennzeichnet, dass** das Copolymer ein Ethylen-Vinylalkohol-Copolymer ist.

3. Flexible Membran nach Anspruch 1, **dadurch gekennzeichnet, dass** der thermoplastische Kunststoff PVAC oder PVOH ist.

4. Flexible Membran nach Anspruch 1 oder 2, **dadurch gekennzeichnet, dass** die Beschichtung (3', 3", 3"', 3"") als wässrige Lösung wenigstens eines Copolymers vorliegt.

5. Verfahren zur Herstellung einer flexiblen Membran nach einem der Ansprüche 1 bis 4, **gekennzeichnet, durch** zumindest folgende Schritte:
- Beschichten der Oberseite und der Unterseite wenigstens einer Gewebelage (4', 4") mit jeweils einer Beschichtung (3', 3", 3"', 3"") auf der Basis wenigstens eines Copolymers oder jeweils mit einer Beschichtung (3', 3", 3"', 3"") auf der Basis wenigstens eines thermoplastischen Kunststoffs,
- Aufbringen einer unvulkanisierten Kautschukmischung, die die obere Elastomerdeckschicht (1') bildet, auf die Oberseite einer Gewebelage (4'),
- Aufbringen einer unvulkanisierten Kautschukmischung, die die untere Elastomerdeckschicht (1") bildet, auf die untere Seite einer Gewebelage (4"),
- Vulkanisation des Verbundes bis zu einem Vernetzungsgrad von 40 bis 60 % für Formmembranen in einer Rotations-Vulkanisieranlage und einem Vernetzungsgrad von 100% für Flachmembranen in einer Rotations-Vulkanisieranlage.

6. Verfahren zur Herstellung einer flexiblen Membran nach Anspruch 5, **dadurch gekennzeichnet, dass** der Verbund nach der Vulkanisation zu einer Flachmembran ausgestanzt wird.

7. Verfahren zur Herstellung einer flexiblen Membran nach Anspruch 5, **dadurch gekennzeichnet, dass** der Verbund nach der Vulkanisation zu einer Formmembran verformt wird.
